# NEUE EUROPÄISCHE PATENTSCHRIFT

(11) **EP 0 735 353 B2**
(45) Veröffentlichungstag und Bekanntmachung des Hinweises auf die Entscheidung über den Einspruch: **17.03.2004**
(45) Hinweis auf die Patenterteilung: 13.01.1999
(21) Anmeldenummer: 95104780.2
(22) Anmeldetag: 31.03.1995
(51) Int. Cl.: G01L 9/00

(54) **Drucksensor**
Pressure sensor
Capteur de pression

(43) Veröffentlichungstag der Anmeldung: 02.10.1996
(73) Patentinhaber: ENDRESS + HAUSER GMBH + CO., D-79689 Maulburg (DE)
(72) Erfinder: Gerst, Peter, D-79576 Weil am Rhein (DE); Banholzer, Karlheinz, D-79688 Hausen (DE); Maier, Winfried, D-79689 Maulburg (DE)
(74) Vertreter: Andres, Angelika

(56) Entgegenhaltungen:
- EP-A- 0 372 988
- DE-A- 4 234 290
- DE-C- 3 629 628
- US-A- 4 898 035
- US-A- 5 134 887
- PATENT ABSTRACTS OF JAPAN vol. 13, no. 464 (P-947) 20. Oktober 1989 & JP-A-01 182 729 (NGK INSULATORS LTD) 20. Juli 1989

## Beschreibung

Die Erfindung betrifft einen Drucksensor mit einem keramischen Sensorelement und einem metallischen Gehäuse, in das das Sensorelement gasdicht eingespannt ist.

In der DE-A 42 34 290 ist ein Drucksensor beschrieben
- mit einem rotationssymmetrischen keramischen Sensorelement,
- mit einem rotationssymmetrischen, eine axiale Bohrung aufweisenden Gehäuse,
   -- deren Durchmesser in Richtung der dem Meßmedium zugewandten Frontseite abnimmt, und
- mit einem einzigen, zwischen Gehäuse und der Mantelfläche des Drucksensor frontbündig eingesetzten Dichtelement aus organischem Material.

Ein derartiges Dichtelement ist nötig, um das keramische Sensorelement druckdicht und spannungsfrei in dem Gehäuse zu fixieren. Diese Dichtungen sind jedoch nicht vollständig gasdicht. Durch Diffusion gelangen nämlich Gasmoleküle durch die Dichtung hindurch in den Gehäuseinnenraum. Weiterhin sind diese Dichtungen bei weitem nicht so korrosionsbeständig wie das keramische Sensorelement.

Konstruktionen, wie zum Beispiel in der EP-B 461 459 beschrieben, ändern an diesem grundsätzlichen Problem nichts. Dort ist ein Drucksensor mit einem Keramiksensor .angegeben, wobei die Fläche des Keramiksensors, an der das Dichtelement anliegt, zur Verbesserung der Dichtheit mit einer Glasschicht versehen ist. Die Kontaktstelle zwischen Glasschicht und Dichtung ist zwar sehr viel undurchlässiger als zwischen Keramik und Dichtung, da Glas eine glattere Oberfläche besitzt als Keramik, die Gasdiffusion durch die Dichtung hindurch besteht jedoch weiterhin unvermindert.

Die Sicherheitsbestimmungen vieler Länder forden eine gasdichte Trennung zwischen Meßmedium und Elektronik, wenn die Drucksensoren in explosionsgefährdeten Bereichen, z.B. bei brennbaren Gasen oder Flüssigkeiten, eingesetzt werden sollen. Derzeit werden, um dies zu erreichen, Kontaktstifte über eine bestimmte Länge eingeglast oder ähnliche aufwendige Durchführungen für elektrische Leitungen verwendet.

Gasdichtheit der Sensoreinspannung läßt sich auch auf anderem Wege erreichen. Druckmittler, wie zum Beispiel in der EP-A 607 482 beschrieben, können vor das Sensorelement geschaltet werden. Solche Druckmittler weisen auf der meßmediumzugewandten Seite eine Membran auf, die in der Regel aus einem dünnen korrosionsbeständigen Metall besteht.

Weiterhin ist die Metallmembran sehr dünn und daher empfindlich. Abrasive Meßmedien erzeugen leicht plastische Verformungen der Membran und damit Meßfehler.

Die US-A-4 898 035 zeigt steife Paßstücke, beispielsweiße in den Figuren 3a,b ein gefaltetes Paßstück 28.

Die Aufgabe der Erfindung besteht darin, einen Drucksensor mit einem keramischen Sensorelement und einem metallischen Gehäuse anzugeben in den das Sensorelement gasdicht eingebaut ist.

Diese Aufgabe wird durch einen Drucksensor nach dem Anspruch 1 oder nach dem Anspruch 2 gelöst. Vorteilhafte Ausgestaltungen sind den abhängigen Ansprüchen 3,4 zu entnehmen.

Vorteile der Erfindung bestehen u.a. darin,
- daß das Sensorelement durch das Paßstück gasdicht mit dem Gehäuse verbunden ist,
- daß die vorgeschlagene Einspannung des Sensorelementes spannungsfrei ist,
- daß die Korrosionsbeständigkeit und die mechanische Beständigkeit der aktiven Sensorffäche voll ausgenutzt werden können, da die Befestigung des Sensorelements und das Paßstück gleichermaßen robust und korrosionsbeständig sind,
- daß ein solcher Drucksensor in explosionsgefährdeten Bereichen eingesetzt werden kann und
- daß der Drucksensor mit frontbündig eingebautem Sensorelement besonders gut zu reinigen und daher für Anwendungen in der Lebensmittelindustrie sehr gut geeignet ist.

Die Erfindung wird nun anhand der Figuren 6, 7 der Zeichnung näher erläutert; die Figuren 1-5 zeigen nicht beanspruchte Drucksensoren.
- Fig. 1 zeigt: einen Längsschnitt eines Drucksensors mit einem Paßstück, das als Rohrstück ausgebildet ist.
- Fig. 2 zeigt: einen Längsschnitt eines Drucksensors mit einem Paßstück, das als Rohrstück ausgebildet ist, in das das Sensorelement fronbündig eingesetzt ist.
- Fig. 3 zeigt: einen Längsschnitt eines Drucksensors mit einem Paßstück, das als Rohrstück mit angeformtem Flansch ausgebildet ist.
- Fig. 4 zeigt: einen Längsschnitt eines Drucksensors mit einem Paßstück, das als ringförmige Scheibe ausgebildet ist.

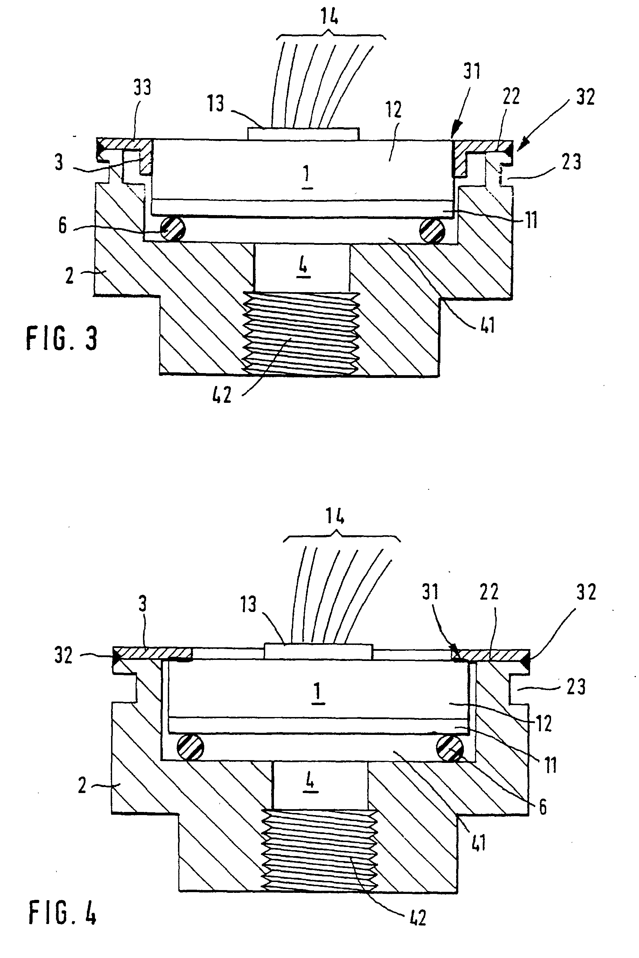

- Fig. 4 zeigt: einen Längsschnitt eines Drucksensors mit einem Paßstück, das als ringförmige Scheibe ausgebildet ist.

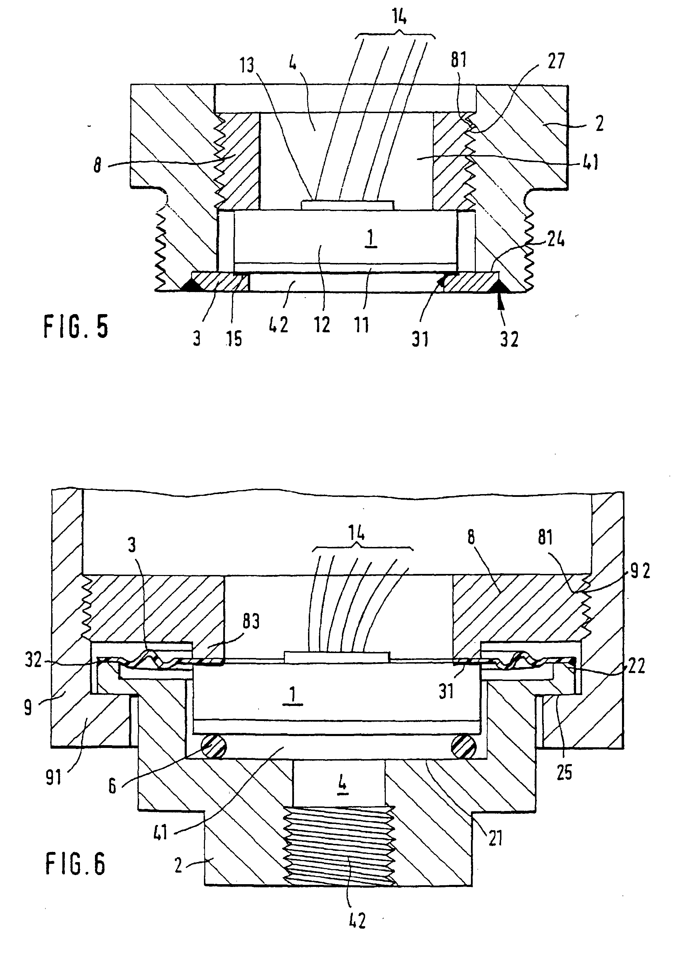

- Fig. 5 zeigt: einen Längsschnitt eines Drucksensors mit einem Paßstück, das als ringförmige Scheibe ausgebildet ist.
- Fig. 6 zeigt: einen Längsschnitt eines Drucksensors nach der Erfindung mit einem Paßstück, das als ringscheibenförmige Membran ausgebildet ist.

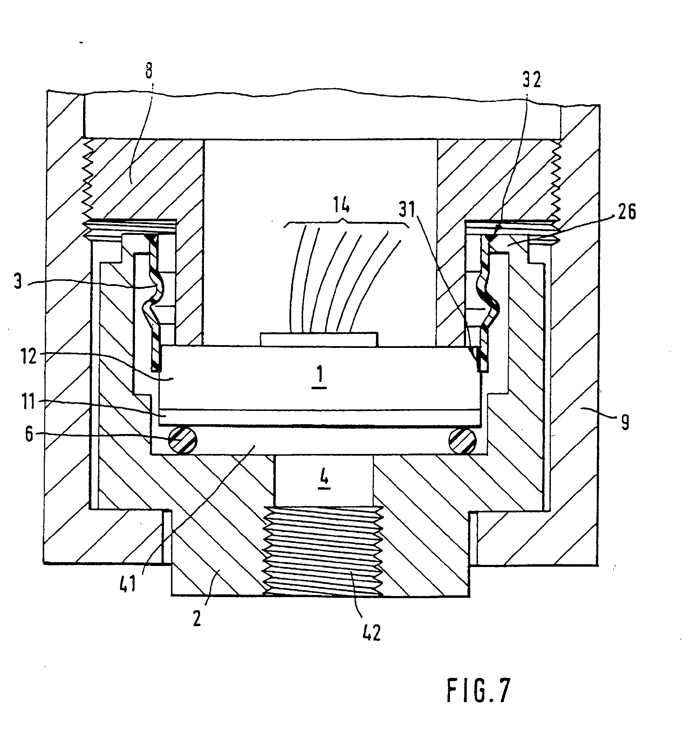

- Fig. 7 zeigt: einen Längsschnitt eines Drucksensors nach der Erfindung mit einem Paßstück, das als rohrförmige Membran ausgebildet ist.

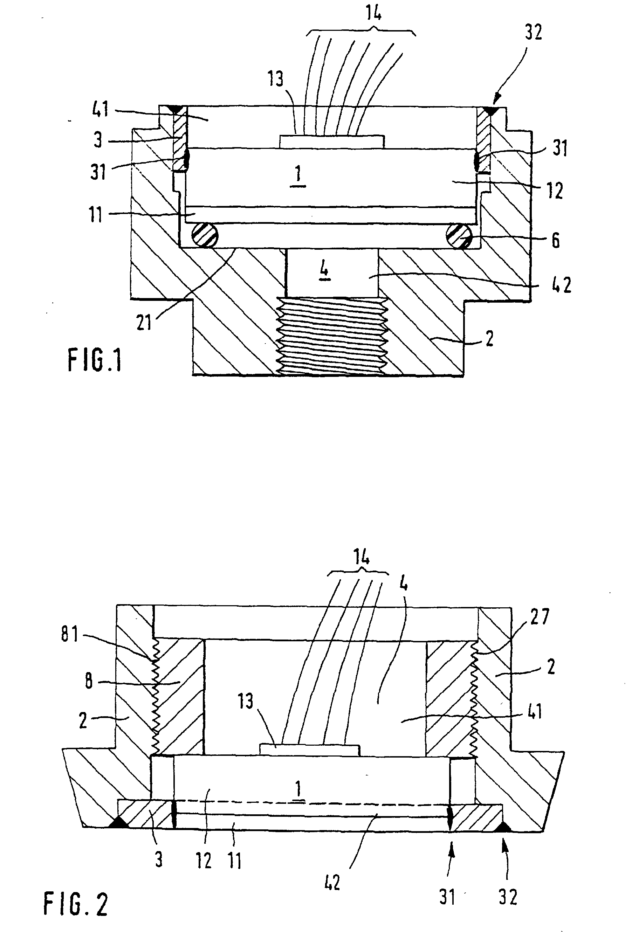

In den Figuren 1 bis 7 ist allen Drucksensoren gemeinsam, daß sie ein rotationssymmetrisches Sensorelement 1 aufweisen, das in einem ebenfalls rotationssymmetrischen, Gehäuse 2 mittels eines Paßstücks 3 gasdicht befestigt ist.

Das Sensorelement 1 ist beispielsweise eine kapazitive, zylindrische Druckmeßzelle, die aus einer Membran 11 und einem Grundkörper 12 besteht, die durch ein Verbindungsmaterial, z.B. ein Aktivhartlot, in einem definierten Abstand voneinander gehalten und miteinander hermetisch dicht verbunden sind. Die mit Elektrodenmaterial beschichteten Innenflächen der Membran 11 und des Grundkörper 12 bilden mindestens einen Meßkondensator, dessen Kapazität von der Durchbiegung der Membran 11 abhängt und somit ein Maß für den an der Membran 11 anliegenden Druck ist.

Die Membran 11 kann aus Keramik, Oxidkeramik, Quarz, Saphir oder einem kristallinen Werkstoff bestehen. Der Grundkörper 12 besteht vorzugsweise aus einem Material, das dem Werkstoff der Membran 11 sehr ähnlich ist oder zumindest einen vergleichbaren thermischen Ausdehnungskoeffizienten aufweist.

Auf der meßmedium-abgewandten Seite weist das Sensorelement 1 eine elektronische Schaltung 13 auf, die die Kapazitätsänderungen des Meßkondensators in ein druckabhängiges elektrisches Signal umwandelt und diese über elektrische Anschlußleitungen 14 einer weiteren Verarbeitung und/oder Anzeige zugänglich macht.

Es ist selbstverständlich möglich anstelle einer Druckmeßzelle eine Differenzdruckmeßzelle zu verwenden. Eine solche Differenzdruckzelle ist z.B. eine Meßzelle der oben beschriebenen Art, die zusätzlich eine Druckzuleitung aufweist, die einen an deren einem Ende anliegenden Druck durch den Grundkörper hindurch in das Innere der Meßzelle leitet.

Das Gehäuse 2 weist jeweils eine zentrale durchgehende Bohrung 4 auf. Das Paßstück 3 bildet ein elastisches Verbindungselement zwischen dem Sensorelement 1 und dem Gehäuse 2. Dadurch ist sichergestellt, daß die Befestigung des Senorelementes 1 spannungsfrei ist.

Das Paßstück 3 besteht aus einem meßmediumbeständigen Material, das einen vergleichbaren Temperaturkoeffizienten wie das Material des Sensorelementes aufweist. Je nach Meßmedium ist das Material des Paßstücks z.B. Nickel, Nickeleisen, Tantal oder Edelstahl. Es ist auch möglich, ein Material zu wählen, das nicht extrem korrosionsbeständig ist, und die meßmedium-berührten Flächen des Paßstücks 3 mit einem korrosionsbeständigeren Material zu beschichten, z.B. Nikkeleisen zu vernickeln oder zu vergolden.

Die gasdichte Verbindung zwischen dem Sensorelement 1 und dem Paßstück 3 ist jeweils eine gasdichte Fügung 31. Ein Beispiel für eine solche gasdichte Fügung 31 zwischen Keramik und Metall ist eine Aktivhartlotverbindung. Aktivhartlot besteht aus einem Lotmaterial dem wenigstens ein reaktives Element, z.B. Titan oder Zirkonium, zulegiert ist. Das reaktive Element benetzt die Oberfläche der zu verlötenden Teile während des Lötens. Bei Oxidkeramik bewirkt die hohe Affinität des reaktiven Elements zum Sauerstoff eine Reaktion mit der Keramik, was zur Bildung von Mischoxiden und freien chemischen Valenzen führt.

Gehäuse 2 und Paßstück 3 sind durch eine Verbindung 32, die in den Figuren lediglich schematisch eingezeichnet ist, gasdicht aneinandergefügt. Diese Verbindung 32 ist beispielsweise eine übliche Schweißverbindung.

In Fig. 1 ist ein Längsschnitt durch ein erstes Ausführungsbeispiel gezeigt. Hier steht die die Membran 11 des Sensorelementes 1 durch die zentrale axiale Bohrung 4 hindurch mit einem Meßmedium, dessen Druck zu messen ist, in Verbindung. Die Bohrung 4 weist zwei Abschnitte 41, 42 auf, wovon der eine Abschnitt 41 sich auf der meßmedium-abgewandten Seite befindet und einen Durchmesser aufweist, der größer als der Durchmesser des Sensorelementes 1 ist, und der andere Abschnitt 42 sich auf der meßmediumzugewandten Seite befindet und einen Durchmesser aufweist, der kleiner als der Durchmesser des Sensorelementes 1 ist.

An der Stelle, an der der Durchmesser seinen Wert ändert weist das Gehäuse 2 eine ringförmige Absatzfläche 21 auf. Auf einer äußeren Ringfläche der Absatzfläche 21 liegt ein Dichtelement 6 auf. Je nach Meßmedium ist dies z. B. ein Viton-O-Ring, eine Kalrez-Dichtung oder eine mit Polytetrafluorethylen ummantelte Viton-Dichtung. Das Sensorelement 1 ist in die Bohrung 4 von der meßmedium-abgewandten Seite her eingesetzt und liegt auf dem Dichtelement 6 auf. Das Paßstück 3 ist als Rohrstück ausgebildet in das das Sensorelement 1 teilweise eingesetzt ist.

Die Kontaktflächen von Sensorelement 1 und Paßstück 3, also ein Teil einer inneren geschlossenen Mantelfläche des Rohrstücks und ein Teil einer äußeren zylindrischen Mantelfläche des Sensorelementes 1 an der meßmedium-abgewandten Seite, sind durch die gasdichte Fügung 31 verbunden. Im Längsschnitt hat die Fügung 31 eine Länge, die ausreicht um das Sensorelement bei Anwendungen innerhalb eines festgelegten Druckbereichs, zu fixieren. Bei einer Aktivhartlotverbindung genügt eine Lötlänge von einigen Millimetern, um die Gasdichtheit zu gewährleisten.

Das Paßstück 3 ist in die Bohrung 4 des Gehäuses 2 eingesetzt. Der Abscnitt 41 des Gehäuses 2 weist zur Aufnahme des Paßstücks 3 auf der meßmedium-abgewandten Seite einen Bereich mit größerem Querschnitt auf. Das Paßstück 3 schließt auf der meßmedium-abgewandten Seite bündig mit dem Gehäuse 2 ab. Die Verbindung 32 zwischen dem Gehäuse 2 und dem Paßstück 3 ist nur schematisch eingezeichnet. Für eine Schweißverbindung 32 beträgt die Länge dieser Verbindung 32 im Längsschnitt ebenfalls einige Millimeter, um die Gasdichtheit zu gewährleisten.

Bei einer Schweißverbindung ist es nötig, das Gehäuse 2 im Bereich der Verbindung 32 dünnwandig auszubilden, da nur Teile von ungefähr gleicher Dicke verschweißbar sind. Aus diesem Grund weist das Gehäuse 2 in diesem Bereich einen geringeren Außendurchmesser auf.

In Fig. 2 ist das Paßstück 3 ebenfalls als Rohrstück ausgebildet. Das Sensorelement 1 ist hier jedoch im Gegensatz zu Fig. 1 auf der meßmedium-zugewandten Seite frontbündig in das Paßstück 3 eingesetzt. Hierzu weist die Bohrung 4 ebenfalls zwei Abschnitte 41, 42 auf, wobei der meßmedium-zugewandte Abschnitt 42 einen größeren Querschnitt aufweist. In diesen Abschnitt 42 ist das Paßstück 3 frontbündig eingesetzt.

Auf der meßmedium-abgewandten Seite ist in das Gehäuse 2 eine Sensorbefestigung 8 eingebracht. Diese Sensorbefestigung 8 ist ein Einschraubstück, das ein Außengewinde 81 aufweist. Dieses Einschraubstück ist mittels eines im Gehäuse 2 auf der meßmedium-abgewandten Seite befindlichen Innengewinde 27 gegen eine äußere meßmedium-abgewandte Ringfläche des Sensorelements 1 geschraubt.

Die beschriebene frontbündige Bauweise ist besonders für den Einsatz in der Lebensmittelindustrie geeignet, da ein solcher Drucksensor leicht zu reinigen ist und keine organischen Dichtelemente aufweist, die in der Lebensmittelindustrie potentielle Bakteriennester darstellen.

In Fig. 3 ist ein Ausführungsbeispiel dargestellt, das in weiten Teilen dem der Fig. 1 entspricht. Es sind daher hier nur die Unterschiede zu Fig. 1 beschrieben. Der Hauptunterschied besteht darin, daß das Paßstück 3 als ein Rohrstück, an das ein Flansch 33 angeformt ist, ausgebildet ist.

In das rohrartige Paßstück 3 ist das Sensorelement 1 teilweise eingesetzt. Das Rohrstück mit dem angeformten Flansch 33 schließt bündig mit der meßmedium-abgewandten Fläche des Sensorelements 1 ab.

Die Kontaktflächen von Sensorelement 1 und Paßstück 3, also ein Teil einer inneren geschlossenen Mantelfläche des Paßstücks 3 und ein Teil einer äußeren zylindrischen Mantelfläche des Sensorelementes 1, sind durch die gasdichte Fügung 31 miteinander verbunden. Der meßmedium-abgewandte Abschnitt 41 der Bohrung 4 weist hier zwei Bereiche mit unterschiedlichem Querschnitt auf. Der Bereich mit dem kleineren Querschnitt befindet sich auf der meßmedium-zugewandten Seite des Abschnitts 41 der Bohrung 4.

Das Paßstück 3 ist in die Bohrung 4 des Gehäuses 2 eingesetzt und liegt mit dem angeformten Flansch 33 auf einer Ringfläche 22 auf, die durch den Abschluß des Gehäuses 2 auf der meßmedium-abgewandten Seite gebildet ist. Gehäuse 2 und Flansch 33 sind miteinander verschweißt oder auf eine andere Weise gasdicht miteinander verbunden. Diese Verbindung 32 ist schematisch gezeigt. Bei einer Schweißverbindung ist es nötig, das Gehäuse 2 im Bereich der Verbindung 32 dünnwandig auszubilden, da nur Teile von ungefähr gleicher Dikke verschweißbar sind. Aus diesem Grund weist das Gehäuse 2 außen direkt unterhalb der Paßstückbefestigung eine ringförmig umlaufende Nut 23 mit rechteckigem Querschnitt auf.

In Fig. 4 ist eine weitere Variante dargestellt, die ebenfalls in weiten Teilen der nach Fig. 1 entspricht. Es sind ebenfalls nur die Unterschiede zu Fig. 1 beschrieben.

Das Gehäuse 2 schließt auf der meßmedium-abgewandten Seite mit einer Ringfläche 22 ab. Diese liegt im Längsschnitt in der gleichen Höhe wie die meßmedium-abgewandte Fläche des Sensorelementes 1.

Das Paßstück 3 ist in diesem Ausführungsbeispiel als eine ringförmige Scheibe ausgebildet. Diese liegt mit einem äußeren Randbereich auf der Ringfläche 22 des Gehäuses 2 und mit einem inneren Randbereich auf einer äußeren Ringfläche der meßmedium-abgewandten Fläche des Sensorelementes 1 auf. Die Kontaktflächen von Sensorelement 1 und Paßstück 3 sind durch die gasdichte Fügung 31 miteinander verbunden.

Analog zu Fig. 3 weist das Gehäuse außen direkt unterhalb der Paßstückbefestigung eine ringförmig umlaufende Nut 23 mit rechteckigem Querschnitt auf.

In Fig. 5 ist ein Ausführungsbeispiel dargestellt, das als Paßstück 3 ebenfalls eine ringförmige Scheibe aufweist. Das Gehäuse 2 ist identisch mit dem in Fig. 2 dargestellten Gehäuse. Das Paßstück 3 ist in den Abschnitt 42 der Bohrung 4 frontbündig eingesetzt und liegt an einer Absatzfläche 24 des Gehäuses an. Mittels der Verbindung 32 ist es gasdicht mit dem Gehäuse 2 verbunden.

Das Sensorelement 1 ist von der meßmedium-abgewandten Seite in das Gehäuse 2 eingesetzt und liegt mit einer äußeren druckunempfindlichen Ringfläche (15) der aktiven Fläche des Sensorelementes auf dem Paßstück 3 auf. Zwischen Sensorelement 1 und Paßstück 3 besteht die gasdichte Verbindung 31.

Es ist eine Sensorbefestigung 8 vorhanden, die identisch mit der in Fig. 2 dargestellten ist.

In Fig. 6 ist das Paßstück 3 als eine ringscheibenförmige Membran ausgebildet. Der Teilabschnitt 41 der Bohrung 4 weist in Fig. 6 zwei Bereiche mit unterschiedlichem Querschnitt auf. Der Bereich mit dem kleineren Querschnitt befindet sich auf der meßmedium-zugewandten Seite. In diesem Bereich ist das Sensorelement 1 eingebracht und liegt auf der Dichtung 6 auf, die sich wiederum auf die Absatzfläche 21 des Gehäuses 2 aufstützt.

Das Gehäuse 2 schließt auf der meßmedium-abgewandten Seite mit einer Ringfläche 22 ab, die sich im Längsschnitt auf der gleichen Höhe wie die meßmedium-abgewandte Fläche des Sensorelementes 1 befindet.

Das membranartige Paßstück 3 liegt mit einer ringförmigen äußeren Randfläche auf der Ringfläche 22 und mit einer ringförmigen inneren Randfläche auf der meßmedium-abgewandten Fläche des Sensorelementes 1 auf.

Damit ein solcher Drucksensor mit einer Membran als Paßstück 3 funktionsfähig ist, ist es nötig, das Sensorelement 1 zu fixieren. Hierzu dient nach Fig.6 ein Außengehäuse 9. Es ist ein Rohr an dessen einem Ende ein Halterungsring 91 angeformt ist. In dieses Außengehäuse 9 ist das Gehäuse 2 eingesetzt und liegt mit einer äußeren Absatzringfläche 25 auf dem Halterungsring 91 auf.

Von der meßmedium-abgewandten Seite her wird das Sensorelement 1 durch eine Sensorbefestigung 8 gegen die Dichtung 6 im Gehäuse 2 gepreßt. Die Sensorbefestigung 8 weist ein Außengewinde 81 auf und wird in ein im Außengehäuse 9 befindliches Innengewinde 92 geschraubt. Die Sensorbefestigung 8 ist ein Ring, an dessen sensorelement-zugewandten Ende ein Rohrstück 83 mit kleinerem Außendurchmesser angeformt ist. Es besitzt die gleiche Querschnittsfläche wie die ringförmige innere Randfläche des Paßstücks 3, mit der dieses auf der meßmedium-abgewandten Fläche des Sensorelementes 1 aufliegt, und ist direkt gegen diese innere Randfläche des Paßstücks 3 geschraubt.

Zwischen dem Gehäuse 2 und dem Außengehäuse 9 braucht keine gasdichte Verbindung zu bestehen, da das Außengehäuse 9 nicht in Kontakt mit dem Meßmedium steht.

In Fig. 7 ist eine andere Variante dargestellt, die als Paßstück 3 eine Membran aufweist, die als Rohrstück ausgebildet ist. In dieses rohrförmige Paßstück 3 ist das Sensorelement 1 teilweise eingesetzt.

Die Kontaktflächen von Sensorelement 1 und Paßstück 3, also ein Teil einer inneren geschlossenen Mantelfläche der rohrförmigen Membran 3 und ein Teil der äußeren zylindrischen Mantelfläche des Sensorelementes 1 an der meßmedium-abgewandten Seite, sind durch die gasdichte Fügung 31 miteinander verbunden.

Im Bereich des sich in axialer Richtung erstreckenden Paßstücks 3 weist der Abschnitt 41 der Bohrung 4 des Gehäuses 2 einen vergrößerten Querschnitt zur Aufnahme der Membran 3 auf. Das Gehäuse schließt auf der meßmedium-abgewandten Seite mit einem sich radial in sein Inneres erstreckenden Ring 26 ab. Die Membran 3 ist in die Bohrung 4 des Gehäuses 2 eingesetzt und an dem Ring 26 befestigt.

Im Bereich der Verbindung 32 zwischen Gehäuse 2 und Paßstück 3 ist das Gehäuses 2 dünnwandig damit bei einem Schweißvorgang keine Verspannungen auftreten. Das Außengehäuse 9 und die Sensorbefestigung 8 sind identisch mit der Fig. 6 und daher hier nicht näher beschrieben.

Die Ausführungsbeispiele der Figuren 2, 5, 6 und 7 sind aufgrund der zusätzlichen Sensorbefestigung 8 bei wesentlich höheren Drücken, z.B. bis ca. 4 MPa (40 bar), einsetzbar als die in Figuren 1, 3 und 4 dargestellten Ausführungsbeispiele, die für einen Druckbereich bis maximal ca. 1 MPa (10 bar) konstruiert sind.

Die Befestigung des Gehäuses 2 am Meßort ist in den Zeichnungen nicht dargestellt. Diese Befestigung erfolgt z.B., indem das Gehäuse 2 als Flansch ausgebildet ist, der am Meßort mit einem Gegenflansch verschraubt wird, indem das Gehäuse 2 ein Außengewinde aufweist, das in eine entsprechende Öffnung eingeschraubt wird, oder indem das Gehäuse 2 als Drehteil ausgebildet ist, das in eine Behälteröffnung eingeschweißt wird. Weitere lösbare oder nicht-lösbare Gehäusebefestigungen sind dem Fachmann bekannt.

## Patentansprüche

1. Drucksensor
- mit einem keramischen Sensorelement (1),
- mit einem metallischen Gehäuse (2)
-- in dem das Sensorelement (1) mittels einer auf der meßmedium-abgewandten Seite des Sensorelements (1) im Gehäuse (2) befindlichen Sensorbefestigung (8) fixiert ist und
- mit einem zwischen Sensorelement (1) und Gehäuse (2) angeordneten metallischen Paßstück (3),
das als Membran ausgebildet ist, und
-- das gasdicht sowohl mit dem Gehäuse (2)
als auch mit dem Sensorelement (1) verbunden ist, wobei
die Membran (3) als Ringmembran ausgebildet ist, von der ein äußerer Randbereich auf einer Ringfläche (22) des Gehäuses (2) und ein innerer Randbereich auf einer von einer aktiven Fläche abgewandten Fläche des Sensorelementes (1) aufliegt.

2. Drucksensor
- mit einem keramischen Sensorelement (1),
- mit einem metallischen Gehäuse (2)
-- in dem das Sensorelement (1) mittels einer auf der meßmedium-abgewandten Seite des Sensorelements (1) im Gehäuse (2) befindlichen Sensorbefestigung (8) fixiert ist und
- mit einem zwischen Sensorelement (1) und Gehäuse (2) angeordneten metallischen Paßstück (3),
das als Membran ausgebildet ist, und
-- das gasdicht sowohl mit dem Gehäuse (2)
als auch mit dem Sensorelement (1) verbunden ist, wobei
die Membran (3) als Rohrmembran ausgebildet ist, in deren einem Ende das Sensorelement (1) fixiert ist.

3. Drucksensor nach Anspruch 1 oder 2, bei dem das Gehäuse (2) eine zentrale axiale Bohrung (4) aufweist, durch die hindurch eine aktive Fläche des Sensorelementes (1) mit einem Meßmedium in Berührung steht, dessen Druck zu messen ist.

4. Drucksensor nach Anspruch 1 oder 2, bei dem sich zwischen der Membran (3) und dem Meßmedium ein Dichtelement (6) befindet.

## Claims

1. Pressure sensor
- having a ceramic sensor element (1),
- having a metallic housing (2)
-- in which the sensor element (1) is fixed by means of a sensor fastening (8) which is located on that side of the sensor element (1) in the housing (2) which is remote from the measuring medium and
- having a metallic adapter (3) which is arranged between the sensor element (1) and housing (2) and
-- which is designed as a diaphragm and
-- which is connected in a gas-tight manner both to the housing (2) and to the sensor element (1), wherein the diaphragm (3) is designed as an annular diaphragm, of which an outer border region bears on an annular surface (22) of the housing (2) an an inner border region bears on a surface of the sensor element (1) which is remote from an active surface.

2. Pressure sensor
- having a ceramic sensor element (1),
- having a metallic housing (2)
-- in which the sensor element (1) is fixed by means of a sensor fastening (8) which is located on that side of the sensor element (1) in the housing (2) which is remote from the measuring medium and
- having a metallic adapter (3) which is arranged between the sensor element (1) and housing (2) and
-- which is designed as a diaphragm and
-- which is connected in a gas-tight manner both to the housing (2) and to the sensor element (1), wherein the diaphragm (3) is designed as a tube diaphragm, in one end of which the sensor element (1) is fixed.

3. Pressure sensor according to claim 1 or 2, in the case of which the housing (2) exhibits a central axial bore (4) through which an active surface of the sensor element (1) is in contact with a measuring medium, the pressure of which is to be measured.

4. Pressure sensor according to claim 1 or 2, in the case of which a sealing element (6) is located between the diaphragm (3) and the measuring medium.

## Revendications

1. Capteur de pression comprenant:
- un élément céramique (1 ) du capteur,
- un boîtier métallique (2)
-- dans lequel l'élément (1 ) du capteur est fixé au moyen d'une fixation (8) du capteur se trouvant dans le boîtier (2), sur le côté de l'élément (1 ) du capteur placé à l'opposé du milieu de mesure, et
- une entretoise métallique (3) disposée entre l'élément (1) du capteur et le boîtier (2),
-- laquelle entretoise est constituée comme une membrane et
-- qui est reliée aussi bien au boîtier (2) qu'à l'élément (1) du capteur en étant étanche aux gaz, dans lequel la membrane (3) est constituée comme une membrane annulaire, don't une zone de bordure extérieure est en appui sur une surface annulaire (22) du boîtier (2) et don't une zone de bordure intérieure est en appui sur une surface de l'élément (1) du capteur, placée à l'opposé d'une surface active

2. Capteur de pression comprenant:
- un élément céramique (1) du capteur,
- un boîtier métallique (2)
-- dans lequel l'élément (1) du capteur est fixé au moyen d'une fixation (8) du capteur se trouvant dans le boîtier (2), sur le côté de l'élément (1 ) du capteur placé à l'opposé du milieu de mesure, et
- une entretoise métallique (3) disposée entre l'élément (1) du capteur et le boîtier (2),
-- laquelle entretoise est constituée comme une membrane et
-- qui est reliée aussi bien au boîtier (2) qu'à l'élément (1) du capteur en étant étanche aux gaz, dans lequel la membrane (3) est constituée comme une membrane tubulaire dans une partie extrême de laquelle l'élément (1) du capteur est fixé.

3. Capteur de pression selon la revendication 1 ou 2, dans lequel le boîtier (2) comprend un percage (4) axial central par lequel une surface active de l'élément (1) du capteur est en contact avec un milieu de mesure don't la pression est à mesurer.

4. Capteur de pression selon la revendication 1 ou 2, dans lequel un élément d'étanchéité (6) se trouve entre la membrane (3) et le milieu de mesure.
